# EUROPEAN PATENT APPLICATION

(11) **EP 4 657 059 A1**
(43) Date of publication of application: **03.12.2025**
(21) Application number: 25180159.3
(22) Date of filing: 02.06.2025
(51) Int. Cl.: G01N 29/04, G01N 29/44

(54) **FILTERING OUT BACKGROUND NOISE FROM MEASUREMENT DATA DURING DEFECT INSPECTION**

(30) Priority: 31.05.2024 US 202418680777
(71) Applicant: RTX Corporation, Farmington, CT 06032 (US)
(72) Inventor: KOETSCH, Christopher T., East Longmeadow, 01028 (US); TAPP, Lauren, Hartford, 06106 (US)
(74) Representative: Dehns

(57) **Abstract**

An inspection method is provided during which a head of an inspection scope is inserted into an interior of a powerplant. The head of the inspection scope includes an actuator and a sensor. The powerplant includes a component within the interior of the powerplant. The head of the inspection scope is abutted against a surface of the component. Vibrations in the component are induced using the actuator. A vibratory response excited by the vibrations is measured using the sensor to provide measurement data. The measurement data is filtered to provide filtered data, and the filtering includes detrending the measurement data.

## Description

### BACKGROUND OF THE DISCLOSURE

### 1. Technical Field

This disclosure relates generally to inspection and, more particularly, to non-destructive inspection for internal defects.

### 2. Background Information

Various systems and methods are known in the art for inspecting a component for internal defects. While these known inspection systems and methods have various benefits, there is still room in the art for improvement.

### SUMMARY OF THE DISCLOSURE

According to an aspect of the present disclosure, an inspection method is provided during which a head of an inspection scope is inserted into an interior of a powerplant. The head of the inspection scope includes an actuator and a sensor. The powerplant includes a component within the interior of the powerplant. The head of the inspection scope is abutted against a surface of the component. Vibrations in the component are induced using the actuator. A vibratory response excited by the vibrations is measured using the sensor to provide measurement data. The measurement data is filtered to provide filtered data, and the filtering includes detrending the measurement data.

According to another aspect of the present disclosure, which the Applicant expressly reserves the right to claim independently, another inspection method is provided during which an inspection device is arranged with a component of a turbine engine. The inspection device includes a piezoelectric transducer. The arranging includes abutting and preloading the inspection device against a surface of the component to provide a preloaded engagement between the piezoelectric transducer and the surface of the component. Vibrations are induced in the component across a frequency range using the piezoelectric transducer. A vibratory response excited by the vibrations across the frequency range is measured using the piezoelectric transducer to provide measurement data. The measurement data is indicative of measured parameter data versus frequency across the frequency range. The measurement data is filtered to provide filtered data. The filtering includes: dividing the measured parameter data into a plurality of segments along the frequency range, determining select values of the measured parameter data for the segments, determining trend data based on the select values of the measured parameter data for the segments, and subtracting the trend data from the measured parameter data. The select values are minimum values or mean values. A characteristic of the component is determined using the filtered data.

According to still another aspect of the present disclosure, which the Applicant expressly reserves the right to claim independently, another inspection method is provided during which an inspection device is arranged with a component of a turbine engine. The inspection device includes a piezoelectric actuator and a piezoelectric sensor. The arranging includes abutting and preloading the inspection device against a surface of the component to provide each of the piezoelectric actuator and the piezoelectric sensor with a preloaded engagement against the surface of the component. Vibrations in the component are induced using the piezoelectric actuator. A vibratory response excited by the vibrations is measured using the piezoelectric sensor to provide measurement data. The measurement data is filtered using a high-pass lifter to provide filtered data. A characteristic of the component is determined using the filtered data.

The measured parameter data may be in phase with the vibrations induced by the piezoelectric transducer, and the selected values may be the minimum values. Alternatively, the measured parameter data may be out of phase with the vibrations induced by the piezoelectric transducer, and the selected values may be the mean values.

The vibratory response may include a vibratory response in the component and a vibratory response in the head of the inspection scope. The filtering may include filtering the measurement data to remove data indicative of the vibratory response in the head of the inspection scope.

The actuator may be configured as or otherwise include a piezoelectric actuator. The sensor may be configured as or otherwise include a piezoelectric sensor. The vibratory response may include a vibratory response in the component, a vibratory response of the piezoelectric actuator and a vibratory response of the piezoelectric sensor. The filtering may include filtering the measurement data to remove data indicative of the vibratory response of the piezoelectric actuator and/or data indicative of the vibratory response of the piezoelectric sensor.

The piezoelectric actuator may engage the surface of the component longitudinally through the piezoelectric sensor.

The actuator and the sensor may be integrated into a piezoelectric transducer. The vibratory response may include a vibratory response in the component and a vibratory response of the piezoelectric transducer. The filtering may include filtering the measurement data to remove data indicative of the vibratory response of the piezoelectric transducer.

The vibrations may be induced in the component across a frequency range. The vibratory response may be measured across the frequency range to provide the measurement data. The measurement data may be indicative of measured parameter data versus frequency across the frequency range. The filtering may include: dividing the measured parameter data into a plurality of segments along the frequency range; determining minimum values of the measured parameter data for the segments; determining minimum value trend data based on the minimum values of the measured parameter data for the segments; and subtracting the minimum value trend data from the measured parameter data.

The measured parameter data may be indicative of a measured electrical admittance.

The measured parameter data may be in phase with the vibrations induced by the actuator.

The vibrations may be induced in the component across a frequency range. The vibratory response may be measured across the frequency range to provide the measurement data. The measurement data may be indicative of measured parameter data versus frequency across the frequency range. The filtering may include: dividing the measured parameter data into a plurality of segments along the frequency range; determining mean values of the measured parameter data for the segments; determining mean value trend data based on the mean values of the measured parameter data for the segments; and subtracting the mean value trend data from the measured parameter data.

The mean values of the measured parameter data for the segments may be determined at midpoints of the segments.

The measured parameter data may be indicative of a measured electrical admittance.

The measured parameter data may be out of phase with the vibrations induced by the actuator.

The measurement data may be filtered using a lifter.

The lifter may be configured as or otherwise include a high-pass lifter.

The inspection method may also include detecting a defect internal to the component using the filtered data.

The inspection method may also include determining a characteristic of the component using the filtered data.

The inspection method may also include preloading the head of the inspection scope against the surface of the component.

The powerplant may be configured as or otherwise include a turbine engine. The component may be configured as a rotor disk.

The powerplant may be installed with an aircraft during at least the inserting, the abutting, the inducing and the measuring.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of a system for inspecting a component of a powerplant.
FIGS. 2A and 2B are partial schematic illustrations of an inspection scope with a piezoelectric actuator and a piezoelectric sensor engaged with the component, where the inspection scope is shown without a guide tube for ease of illustration.
FIG. 3 is a partial schematic illustration of the inspection scope with a piezoelectric transducer engaged with the component, where the inspection scope is shown without the guide tube for ease of illustration.
FIG. 4 is a flow diagram of a method for inspecting a component of a powerplant.
FIGS. 5A and 5B are graphs of various measured resonant signatures compared to a model resonant signature.
FIGS. 6A-E graphically illustrate steps for detrending measurement data using a min-max-mean technique.
FIGS. 7A-C graphically illustrate steps for detrending measurement data using a liftering technique.

### DETAILED DESCRIPTION

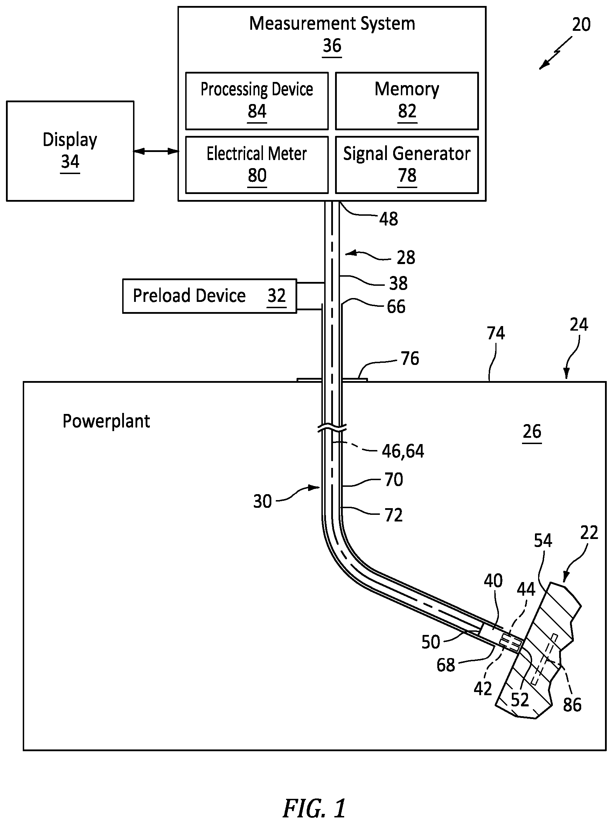

FIG. 1 illustrates a system 20 for non-destructive inspecting a component 22 of a powerplant 24 for an aircraft. The aircraft may be an airplane, a helicopter, a drone (e.g., an unmanned aerial vehicle (UAV)) or any other manned or unmanned aerial vehicle or system. The aircraft powerplant 24 may be configured as, or otherwise included as part of, a propulsion system for the aircraft. The aircraft powerplant 24, for example, may be a turbofan engine, a turbojet engine, a turboprop engine, a turboshaft engine, or any other type of gas turbine engine configured to generate thrust and/or drive rotation of a ducted or open propulsor rotor configured to generate thrust. The aircraft powerplant 24 may alternatively be configured as, or otherwise included as part of, a power generation system for the aircraft. The aircraft powerplant 24, for example, may be an auxiliary power unit (APU) or any other type of gas turbine engine configured to mechanically power operation of an electrical generator. The present disclosure, however, is not limited to such exemplary aircraft powerplants. The inspection systems and methods of the present disclosure, for example, may also be used for inspecting components of other types of internal combustion engines and/or components of various other types of power units; e.g., an electric machine, a hybrid-electric power unit, etc.

The inspection system 20 is configured to facilitate inspection of the powerplant component 22 while that powerplant component 22 remains installed with the aircraft powerplant 24 and, for example, while the aircraft powerplant 24 remains substantially or completely assembled. The powerplant component 22 of FIG. 1, for example, is disposed within an interior 26 (e.g., an enclosed volume, an encased volume, etc.) of the aircraft powerplant 24. The inspection system 20 is also configured to facilitate inspection of the powerplant component 22 while the aircraft powerplant 24 remains onboard the aircraft; e.g., remains installed on wing, on fuselage, in airframe, etc. The inspection of the powerplant component 22 may also be performed using the inspection system 20 while outside of an aircraft hangar and/or a dedicated inspection and/or repair facility; e.g., on a tarmac at an airport between aircraft flights. The inspection of the powerplant component 22 may thereby be performed with a relatively short aircraft downtime and/or a relatively minimal expense. The inspection system 20, of course, may also be used for inspecting the powerplant component 22 installed with the aircraft powerplant 24 when that aircraft powerplant 24 is not installed with the aircraft (e.g., prior to installation with the aircraft or following removal from the aircraft) and/or when the aircraft powerplant 24 is partially disassembled into one or more sub-assemblies.

The powerplant component 22 may be any inspectable (e.g., metal) component within the aircraft powerplant 24. However, for ease of description, the powerplant component 22 may be described below as a rotor disk of a bladed rotor within a gas turbine engine, and the aircraft powerplant 24 may be described below as the gas turbine engine. The rotor disk may be a turbine disk such as a rotor disk in a high pressure turbine (HPT) section or a low pressure turbine (LPT) section of the gas turbine engine. Alternatively, the rotor disk may be a compressor disk such as a rotor disk in a low pressure compressor (LPC) section or a high pressure compressor (HPC) section of the gas turbine engine. The present disclosure, however, is not limited to such exemplary powerplant component configurations. The powerplant component 22, for example, may alternatively be configured as a hub, a shaft or any rotating component within the aircraft powerplant 24.

The inspection system 20 may be configured as an inspection scope inspection system. The inspection system 20 of FIG. 1, for example, includes an inspection device such as an electronic inspection scope 28, a guide tube 30 and a preload device 32. This inspection system 20 also includes a display 34 and a measurement system 36. Examples of the display 34 include, but are not limited to, a screen, a monitor and/or a touch screen.

The inspection scope 28 may be configured as or otherwise include a borescope or another flexible or rigid elongated probe. The inspection scope 28 of FIG. 1, for example, includes a scope body 38 (e.g., a flexible tether), a scope head 40, a vibration actuator 42 and a vibration sensor 44. Note, while the vibration actuator 42 and the vibration sensor 44 are schematically shown in FIG. 1 as separate elements of the inspection scope 28, it is contemplated the vibration actuator 42 and the vibration sensor 44 may be integrated into a single electromechanical device as described below in further detail.

The scope body 38 extends longitudinally along a longitudinal centerline 46 of the inspection scope 28 and its members 38 and 40 from a base end 48 of the inspection scope 28 to a longitudinal proximal end 50 of the scope head 40. The scope body 38 is a flexible body.

The scope head 40 is disposed at a longitudinal distal end 52 of the inspection scope 28. The scope head 40 of FIG. 1, for example, extends longitudinally along the scope centerline 46 from the head proximal end 50 to the scope distal end 52 of the inspection scope 28; here, also a longitudinal distal end of the scope head 40. The vibration actuator 42 and the vibration sensor 44 are each arranged with (e.g., mounted to and/or disposed in) the scope head 40. The vibration actuator 42 and the vibration sensor 44 of FIG. 1 are also each disposed at (e.g., on, adjacent or proximate) the scope distal end 52. At this scope distal end 52, the scope head 40 is configured to longitudinally contact, abut against or otherwise engage an exterior surface 54 of the powerplant component 22 at an inspection location for the inspection of the powerplant component 22. Here, one or more of the scope members 42 and/or 44 also directly or indirectly engage the component surface 54 at the scope distal end 52.

The vibration actuator 42 is configured to induce vibrations in the powerplant component 22 based on a control signal received from the measurement system 36. The vibration sensor 44 is configured to measure a vibratory response in the powerplant component 22 excited by the vibrations induced by the vibration actuator 42. The vibration sensor 44 is further configured to provide an output signal or signals to the measurement system 36 indicative of the measured vibratory response.

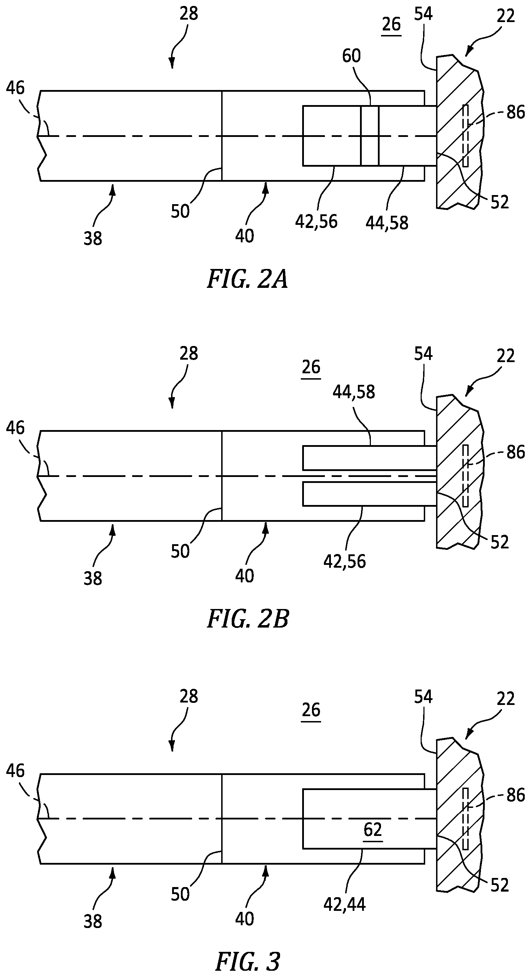

The vibration actuator 42 and the vibration sensor 44 may be configured as or otherwise include one or more piezoelectric devices. For example, referring to FIGS. 2A and 2B, the vibration actuator 42 may be configured as or otherwise include a piezoelectric actuator 56. The vibration sensor 44 may be configured as or otherwise include a piezoelectric sensor 58. The vibration actuator 42, the vibration sensor 44 and their piezoelectric devices 56 and 58 may thereby be respectively configured as discrete elements of the scope head 40. In some embodiments, referring to FIG. 2A, the vibration actuator 42, the vibration sensor 44 and their piezoelectric devices 56 and 58 may be arranged in a stack. The piezoelectric sensor 58 of FIG. 2A, for example, is arranged longitudinally between the piezoelectric actuator 56 and the scope distal end 52. The piezoelectric actuator 56 may thereby longitudinally engage the component surface 54 at the scope distal end 52 through the piezoelectric sensor 58. Here, the piezoelectric actuator 56 is separated from the piezoelectric sensor 58 by an electrical isolator 60. In other embodiments, referring to FIG. 2B, the vibration actuator 42 and its piezoelectric actuator 56 and the vibration sensor 44 and its piezoelectric sensor 58 may be arranged to independently longitudinally engage the component surface 54 at the scope distal end 52. The piezoelectric actuator 56 of FIG. 2B, for example, is arranged laterally next to the piezoelectric sensor 58. However, referring to FIG. 3, the vibration actuator 42 and the vibration sensor 44 may alternatively be integrated together into a single piezoelectric device - a piezoelectric transducer 62 which both induces the vibrations and measures the vibratory response.

Examples of the piezoelectric device(s) 56, 58, 62 include, but are not limited to, a piezoelectric stack and a single crystal piezoelectric device. The piezoelectric stack may include a longitudinal stack (or multiple layers) of piezoelectric elements. The single crystal piezoelectric device may include a piezoelectric ceramic element with a single crystal orientation and no grain boundaries. In general, the single crystal piezoelectric device may provide higher power and greater sensitivity than a comparable piezoelectric stack. The present disclosure, however, is not limited to the foregoing exemplary piezoelectric device configurations. Moreover, it is contemplated the vibration actuator 42 may be configured as another type of electromechanical device operable to induce vibrations, and/or the vibration sensor 44 may be configured as another type of electromechanical device operable to measure the vibratory response.

The guide tube 30 may be configured as or otherwise include a length of stiff, rigid tubing. The guide tube 30 extends longitudinally along a centerline 64 of the guide tube 30 from a base end 66 of the guide tube 30 to a distal end 68 of the guide tube 30. The tube centerline 64 of FIG. 1 is parallel with (e.g., coaxial with) the scope centerline 46. A sidewall 70 of the guide tube 30 forms an inner center bore 72 of the guide tube 30. The tube bore 72 extends longitudinally along the centerline 46, 64 through the guide tube 30 from the tube base end 66 to the tube distal end 68. At least a portion of the guide tube 30 and its tube centerline 64 may be curved (e.g., arcuate or otherwise bent) near the tube distal end 68.

The guide tube 30 may be removably mounted to the aircraft powerplant 24 for the inspection of the powerplant component 22. The guide tube 30, for example, may be rigidly attached to a stationary structure 74 (e.g., a casing, a wall, etc.) of the aircraft powerplant 24 through a guide tube mount 76. Briefly, this stationary structure 74 may house and/or form the interior 26 of the aircraft powerplant 24. The tube mount 76 may be bonded or otherwise fixed to the tube sidewall 70. The tube mount 76 of FIG. 1 projects laterally out (e.g., radially outward relative to the tube centerline 64) from the tube sidewall 70 along a surface of the stationary structure 74. The tube mount 76 may be abutted against the stationary structure 74 and its surface. The tube mount 76 is mechanically fastened (e.g., bolted), clamped or otherwise attached to the stationary structure 74.

The guide tube 30 is configured to facilitate locating the scope head 40 and its members 42 and 44 with the powerplant component 22. The guide tube 30 of FIG. 1, for example, is configured as a guide for inserting the inspection scope 28 into the interior 26 of the aircraft powerplant 24. The guide tube 30 of FIG. 1 is also configured as a support (e.g., a frame, a backbone, an exoskeleton, etc.) for a longitudinal length of the relatively flexible inspection scope 28 and its scope body 38 which extends longitudinally from (a) a location outside of the interior 26 of the aircraft powerplant 24 to (b) a location inside of the interior 26 of the aircraft powerplant 24 next to the powerplant component 22 and its component surface 54. The inspection scope 28 of FIG. 1, for example, extends longitudinally through the guide tube 30 and its tube bore 72 from the scope base end 48 to the scope distal end 52, where both ends 48 and 52 are disposed outside of the guide tube 30. The guide tube 30 and its tube sidewall 70 provide a stiff, rigid structure for the relatively flexible inspection scope 28 and its members 38 and 40 to engage; e.g., contact, slide against, rest against, etc. The scope head 40 may thereby slide along an interior surface of the tube sidewall 70 during assembly of the inspection scope 28 with the guide tube 30. Following this assembly, the guide tube 30 may maintain an extended linear (e.g., non-buckled, non-kinked, etc.) form of the inspection scope 28 for at least the length of the inspection scope 28 within the guide tube 30.

The tube distal end 68 of FIG. 1 is (e.g., slightly) longitudinally spaced from the powerplant component 22 and its component surface 54 along the centerline 46, 64 by a gap; e.g., an air gap. By contrast, the inspection scope 28 projects longitudinally out from the tube distal end 68 to its scope distal end 52; e.g., the distal end of the scope head 40. At the scope distal end 52, the inspection scope 28 and its scope head 40 longitudinally engage the powerplant component 22 and its component surface 54 as described above. The tube distal end 68 is thereby longitudinally recessed from the scope distal end 52 along the centerline 46, 64.

The preload device 32 is operatively coupled to (a) the guide tube 30 and (b) the inspection scope 28 and its scope body 38. The preload device 32 is configured to preload the scope head 40 and one or more of its members 42 and/or 44 against the component surface 54 at the inspection location. The preload device 32, for example, may push the scope body 38 further into the guide tube 30 and apply a longitudinal force onto the scope body 38, for example once the scope body 38 can no longer move longitudinally further into the guide tube 30. The longitudinal force may transfer longitudinally through the scope body 38 and into the scope head 40, thereby pressing the scope head 40 against the component surface 54. The scope head 40 and one or more of its members 42 and/or 44 may thereby be preloaded against the component surface 54.

The measurement system 36 is configured in signal communication (e.g., hardwired and/or wirelessly coupled) with the inspection scope 28 and its scope members 42 and 44 as well as the display 34. The measurement system 36 of FIG. 1 may be in signal communication with the scope members 42 and 44 through one or more (e.g., electrically conductive and/or optical) signal paths extending within the scope body 38. The measurement system 36 may be implemented with a combination of hardware and software. The hardware may include a signal generator 78 (e.g., an oscillating power source), an electrical meter 80, a memory 82 and at least one processing device 84, which processing device 84 may include one or more single-core and/or multi-core processors. The hardware may also or alternatively include analog and/or digital circuitry other than that described above.

The signal generator 78 is in signal communication with the processing device 84 such that operation of the signal generator 78 is controlled by the processing device 84. The signal generator 78 is also in signal communication with the vibration actuator 42; e.g., the piezoelectric actuator 56 of FIG. 2A or 2B, or the piezoelectric transducer 62 of FIG. 3. This signal generator 78 is configured to energize the vibration actuator 42 with an electrical voltage during the inspection of the powerplant component 22.

The electrical meter 80 is in signal communication with the processing device 84. The electrical meter 80 is also in signal communication with the vibration sensor 44; e.g., the piezoelectric sensor 58 of FIG. 2A or 2B, or the piezoelectric transducer 62 of FIG. 3. This electrical meter 80 is configured to measure an electrical parameter at or across the vibration sensor 44. Examples of the electrical parameter include, but are not limited to, an electrical voltage, an electrical current and/or an electrical impedance or admittance. The electrical meter 80 may be or otherwise include a voltage meter, a current meter, an impedance or admittance meter, or a multimeter.

The memory 82 is configured to store software (e.g., program instructions) for execution by the processing device 84, which software execution may control and/or facilitate performance of one or more operations such as those described below. The memory 82 may be a non-transitory computer readable medium. For example, the memory 82 may be configured as or include a volatile memory and/or a nonvolatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a nonvolatile memory may include a read only memory (ROM), an electrically erasable programmable read-only memory (EEPROM), a computer hard drive, etc.

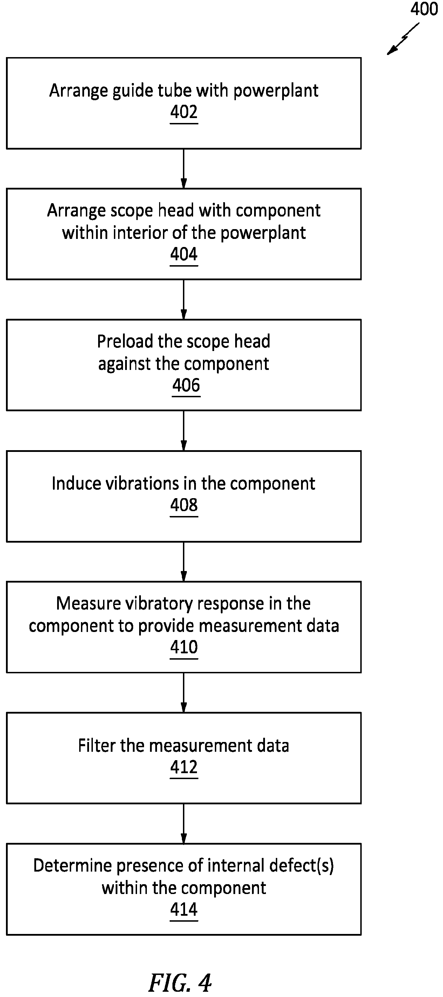

FIG. 4 is a flow diagram of a method 400 for inspecting the powerplant component 22 - a specimen component to be inspected. For ease of description, the inspection method 400 is described below with reference to the inspection system 20 of FIGS. 1-3. The powerplant component 22 is also described below as being installed with the aircraft powerplant 24 and disposed within the interior 26 of the aircraft powerplant 24, where the aircraft powerplant 24 remains installed onboard the aircraft. The inspection method 400 of the present disclosure, however, may alternatively be performed with other inspection systems and/or while the aircraft powerplant 24 is removed from the aircraft and/or when the aircraft powerplant 24 is partially disassembled into one or more sub-assemblies.

In step 402, the guide tube 30 is arranged with the aircraft powerplant 24. In particular, an inner portion of the guide tube 30 of FIG. 1 is inserted into the interior 26 of the aircraft powerplant 24. To facilitate this insertion, an access cover, a powerplant component and/or the like may be removed from the aircraft powerplant 24 or opened to provide an access port into the interior 26 of the aircraft powerplant 24. The inner portion of the guide tube 30 may then be passed through the access port into the interior 26 of the aircraft powerplant 24. Once in position within the interior 26 of the aircraft powerplant 24, the guide tube 30 may be fixedly coupled to the stationary structure 74 using the tube mount 76. The guide tube 30 may thereby be anchored to the stationary structure 74 and fixed within the interior 26 of the aircraft powerplant 24. In this fixed position, the tube distal end 68 is (e.g., slightly) longitudinally spaced from the powerplant component 22 and its component surface 54 by a gap as described above.

In step 404, the scope head 40 is arranged with the powerplant component 22. The scope head 40, for example, is inserted into the interior 26 of the aircraft powerplant 24. More particularly, the scope head 40 is inserted into the tube bore 72. The inspection scope 28 and its scope head 40 are then passed longitudinally through the guide tube 30 and its tube bore 72 until the scope head 40 and its distal end abut against the powerplant component 22 and its component surface 54 at the inspection location.

In step 406, the scope head 40 is preloaded against the powerplant component 22 and its component surface 54 at the inspection location. The preload device 32, for example, may push the scope body 38 further into the guide tube 30 and apply a longitudinal force onto the scope body 38, for example once the scope body 38 can no longer move longitudinally further into the guide tube 30. The longitudinal force may transfer longitudinally through the scope body 38 and into the scope head 40, thereby pressing the scope head 40 against the component surface 54. The scope head 40 and one or more of its members 42 and/or 44 may thereby be preloaded against the component surface 54; see also FIG. 2A, 2B or 3. This preload may be equal to or greater than one or two pounds (1-2 lbs) (0.45 kg to 0.91 kg); e.g., between one and one-half pounds (1.5 lbs) and four and one-half pounds (4.5 lbs) (0.68 kg to 2.04 kg). The present disclosure, however, is not limited to such an exemplary preload and may change based on actuator and/or sensor specifications.

In step 408, vibrations are induced in the powerplant component 22 using the vibration actuator 42 at the inspection location. The processing device 84, for example, may signal the signal generator 78 to energize the vibration actuator 42 with a voltage. The energizing of the vibration actuator 42 generates vibrations. The vibrations may be transferred into the powerplant component 22 through the preloaded engagement between the vibration actuator 42 and the component surface 54 at the inspection location; e.g., see FIG. 2A, 2B or 3. The vibrations may be induced to sweep across a range of frequencies during the step 408; e.g., a five kilohertz (5 kHz) range, a ten kilohertz (10 kHz) range, a twenty kilohertz (20 kHz) range, one hundred kilohertz (100 kHz), or any other suitable range which will facilitate mapping of a response signature as described below. The vibrations may thereby be induced at multiple different frequencies spanning the frequency range.

In step 410, a system vibratory response is measured using the vibration sensor 44 at the inspection location to provide measurement data. This system vibratory response includes a vibratory response in the powerplant component 22. The system vibratory response may also include a vibratory response in the inspection scope 28 and, more particularly, one or more elements of the scope head 40. For example, referring to FIGS. 2A and 2B, the vibrations induced by the vibration actuator 42 may also induce a vibratory response in a structure / material of the piezoelectric actuator 56 and/or a structure / material of the piezoelectric sensor 58 itself. In another example, referring to FIG. 3, the vibrations induced by the vibration actuator 42 may also induce a vibratory response in structure / material of the piezoelectric transducer 62 of FIG. 3. Such vibratory response(s) in the structure / material of the element(s) 56, 58, 62 may also be sensed by the vibration sensor 44 along with the vibratory response in the powerplant component 22.

During the measurement step 410, the vibratory response in the powerplant component 22 as well as the vibratory response in the scope head 40 may energize (or otherwise be sensed by) the vibration sensor 44. The electrical meter 80 measures the electrical parameter (e.g., the electrical voltage, the electrical current, or the electrical impedance or admittance) at or across the vibration sensor 44. The electrical meter 80 then provides a measurement signal (or signals) indicative of the measured electrical parameter to the processing device 84. Data communicated by this measurement signal may form or be included in the measurement data; e.g., where the electrical parameter is the electrical impedance or admittance, or the electrical current. Alternatively, the processing device 84 may process the data communicated by the measurement signal to provide the measurement data. For example, where the electrical parameter is the electrical voltage measured across the vibration sensor 44, the data communicated by the measurement signal may be processed with data indicative of the voltage applied across the vibration actuator 42 (e.g., using a transfer function) to determine the measurement data.

In step 412, the measurement data is filtered to provide filtered data. More particularly, the measurement data is filtered to remove background noise associated with the inspection scope 28 and its scope head 40. The filtering, for example, may remove data indicative of / associated with the vibratory response(s) in the structure / material of the element(s) 56, 58, 62 from the measurement data to provide the filtered data. The filtered data may thereby more closely represent the vibrator response in the powerplant component 22. This filtering may be performed using various techniques as described below in further detail.

In step 414, the filtered data is processed to determine whether or not the powerplant component 22 includes any internal defects 86 at and/or around the respective inspection location. Herein, the term "defect" may describe a physical anomaly present within a component which may negatively affect a useful life of that component and/or performance of that component. Examples of the internal defect(s) 86 include, but are not limited to, cracks, voids, corrosion, density variations, areas of poor solidification (e.g., sintering) and/or the like.

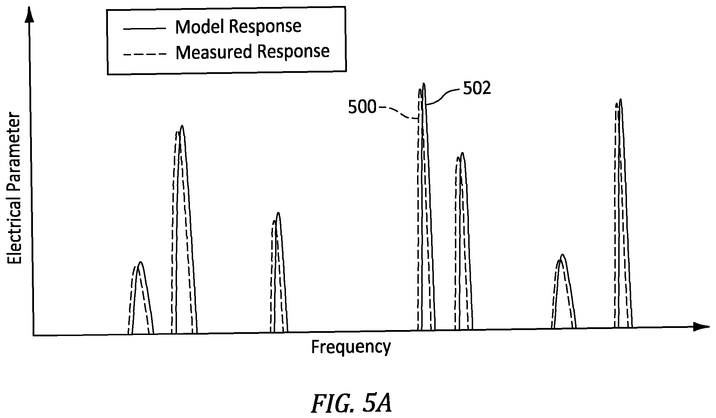

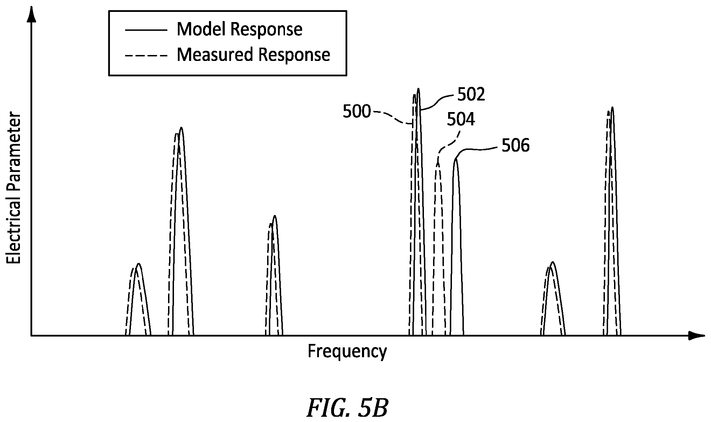

During the step 414, the measurement system 36 may analyze the measured vibratory response to determine resonant frequencies and/or other structural mode parameters for the powerplant component 22. Referring to FIG. 5A, where these resonant frequencies (or other structural mode parameters) match (or are within tolerance of) corresponding expected resonant frequencies (or other structural mode parameters) for a model component (e.g., a computer modeled component, a previously inspected component, etc.) without any internal defects, the measurement system 36 may determine the powerplant component 22 does not include, or there is a low probability that the powerplant component 22 includes, any internal defects. For example, a measured resonance signature 500 of the measured resonant frequencies in FIG. 5A is the same as, or is within tolerance of, a model resonance signature 502 of expected resonant frequencies for the model component without any internal defects. Note, the matching model and measured responses are shown in FIGS. 5A and 5B slightly laterally offset for clarity of illustration. By contrast referring to FIG. 5B, where one or more of the resonant frequencies and/or other structural mode parameters do not match (or are outside tolerance of) the corresponding expected resonant frequencies and/or other structural mode parameters for the model component without any internal defects, the measurement system 36 may determine the powerplant component 22 does include, or there is a high probability that the powerplant component 22 includes, one or more internal defects 86. For example, the resonance signature 500 of the measured resonant frequencies in FIG. 5B includes an outlier resonant frequency 504 which is different than (e.g., does not align with) and is outside of tolerance of a corresponding resonant frequency 506 for the resonance signature 502 of the expected resonant frequencies for the model component without any internal defects. In the foregoing example, the powerplant component 22 and the model component have a common (e.g., the same) configuration and, thus, may share a common manufacturer component identification such as the same part number, the same assembly number, etc. Using this methodology, the inspection method 400 and the inspection system 20 may non-destructively identify presence of internal defect(s) 86 within the powerplant component 22 while that powerplant component 22 remains installed with the aircraft powerplant 24 and/or the aircraft powerplant 24 remains installed onboard the aircraft.

When the step 414 identifies presence of no internal defects in material of the powerplant component 22, information indicative of such may be presented on the display 34. This information may simply identify the presence of no internal defects. The information may also or alternatively indicate the inspected powerplant component 22 meets / is within a component specification (e.g., a design specification) for that powerplant component 22. The aircraft powerplant 24 may then be identified as being ready for continued operation assuming, for example, no other regular scheduled maintenance tasks and/or inspections need to be performed. Similarly, when the step 414 identifies the presence of internal defect(s) 86, information indicative of such may be presented on the display 34. This information may simply identify the presence of internal defects 86. The information may also or alternatively indicate the inspected powerplant component 22 does not meet / is outside of the component specification for that powerplant component 22. Inspection personnel may then take appropriate next steps to further inspect the powerplant component 22 and/or initiate a process for swapping out the aircraft powerplant 24, repairing the powerplant component 22 or replacing the powerplant component 22. While the inspection method 400 is described above identifying whether or not the inspected powerplant component 22 includes any internal defects 86, this inspection method 400 may also (or alternatively) be extended to determine one or more other physical characteristics about the inspected powerplant component 22.

After performing the step 410, 412 or 414, the inspection scope 28 and the guide tube 30 may be removed from the interior 26 of the aircraft powerplant 24. Alternatively, the inspection scope member(s) 40, 42, 44 may be (e.g., slightly) retracted from the powerplant component 22 and its component surface 54. Thus, when the powerplant component 22 is rotatable (e.g., where the powerplant component 22 is the rotor disk), the powerplant component 22 may be rotated about its rotational axis to facilitate repeating the foregoing inspection method 400 at another inspection location.

The vibrations induced in the powerplant component 22 during the step 408 may have a frequency equal to or greater than thirty kilohertz (30 kHz); e.g., equal to or greater than forty kilohertz (40 kHz) or fifty kilohertz (50 kHz) up to about two hundred kilohertz (200kHz) or two hundred and fifty kilohertz (250kHz). This frequency may be a lower bound, an upper bound or an intermediate frequency within the range of frequencies swept during the vibration inducement step 408. By vibrating the powerplant component 22 at such a relatively high frequency, the inspection method 400 and/or the inspection system 20 may detect one or more internal defects 86 with a dimension (e.g., a width, a length, etc.) equal to or less than one hundred mils (0.10 inches) (2.54 mm) or one hundred and fifty mils (0.15 inches) (3.81 mm). More particularly, the inspection method 400 and/or the inspection system 20 may detect one or more internal defects 86 with a relatively small dimension equal to or less than fifty mils (0.05 inches) (1.27 mm); e.g., equal to or less than forty mils (0.04 inches) (1.02 mm). Here, the powerplant component 22 is constructed from a metal. It is contemplated, however, the vibrations may alternatively be induced at a frequency below thirty kilohertz (30 kHz) when detecting larger internal defect(s) 86 within the powerplant component 22 and/or when inspecting a powerplant component 22 with another material construction. Moreover, the vibrations may still alternatively be induced at a frequency above two hundred and fifty kilohertz (250kHz) when detecting even smaller internal defect(s) 86 within the powerplant component 22 and/or when inspecting a powerplant component with still another material construction.

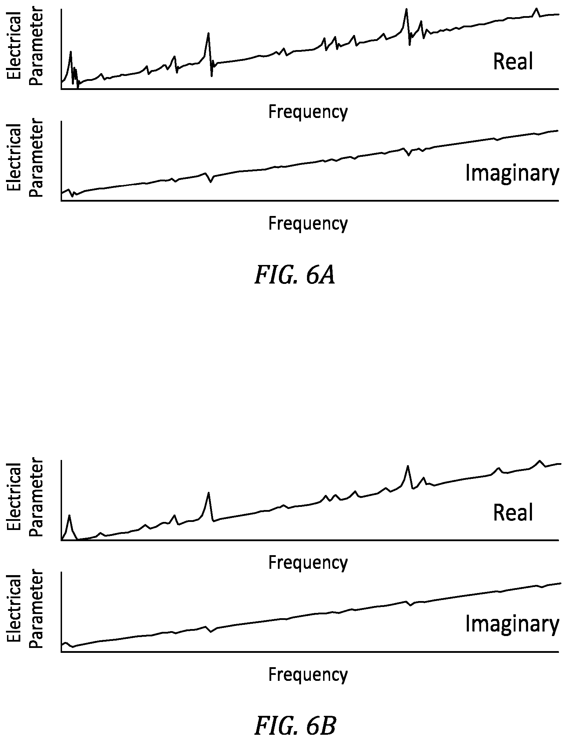

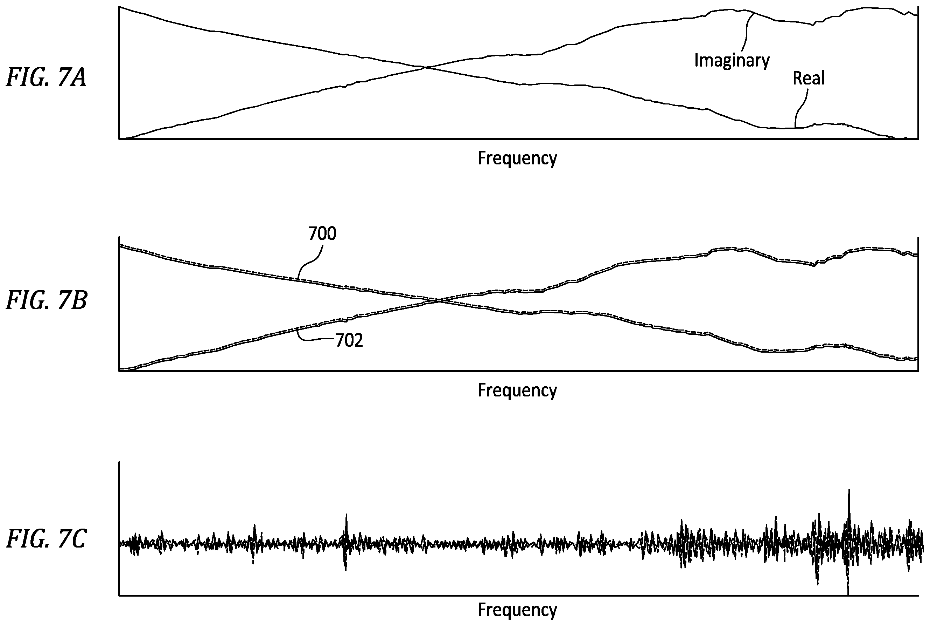

During the step 412, the measurement data may be filtered by detrending the measurement data. This detrending may be performed using a min-max-mean technique; e.g., see FIGS. 6A-E. The min-max-mean technique may be particularly useful for detrending measurement data obtained using, for example, a single device (e.g., the piezoelectric transducer 62 of FIG. 3) for both inducing the vibrations in the powerplant component 22 as well as measuring the vibratory response in the powerplant component 22. The detrending may alternatively be performed using a liftering technique; e.g., see FIGS. 7A-C. The liftering technique may be particularly useful for detrending measurement data obtained using, for example, discrete devices (e.g., the piezoelectric actuator 56 and the piezoelectric sensor 58 of FIG. 2A or 2B) for inducing the vibrations in the powerplant component 22 and measuring the vibratory response in the powerplant component 22. It is contemplated, however, the min-max-mean technique and/or the liftering technique may alternatively be performed on measurement data obtained from various other inspection system actuator-sensor arrangements.

FIG. 6A graphically illustrates an example of the measurement data obtained during the step 410. This measurement data is indicative of measured parameter data (e.g., a value of the measured electrical parameter) as a function of frequency. This measured parameter data may include both real measured parameter data and imaginary measured parameter data. Herein, the real measured parameter data is associated with a response signal which is in phase with the vibrations induced by the vibration actuator 42 / the voltage provided to the vibration actuator 42 from the signal generator 78. Herein, the imaginary measured parameter data is associated with a response signal which is (e.g., ninety degrees (90°)) out of phase with the vibrations induced by the vibration actuator 42 / the voltage provided to the vibration actuator 42 from the signal generator 78.

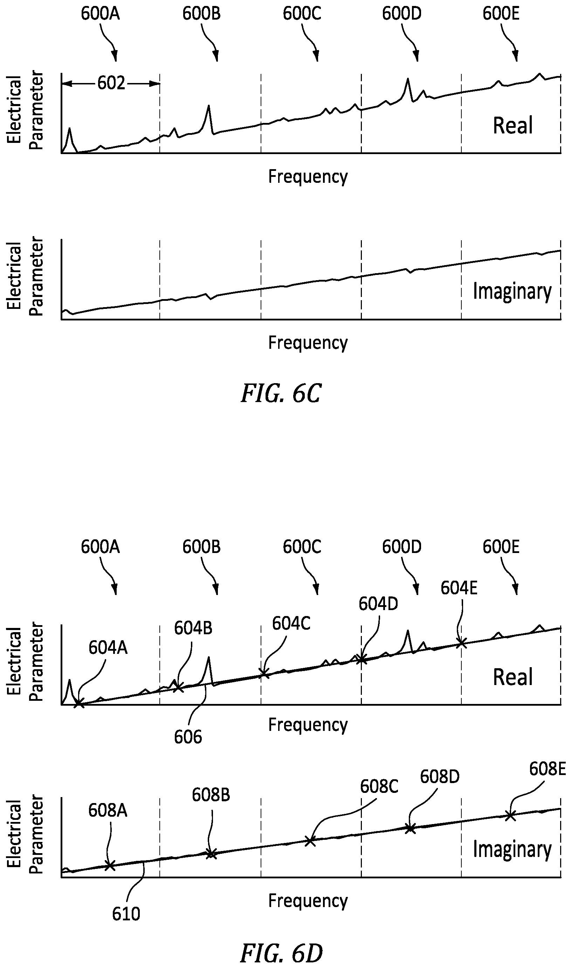

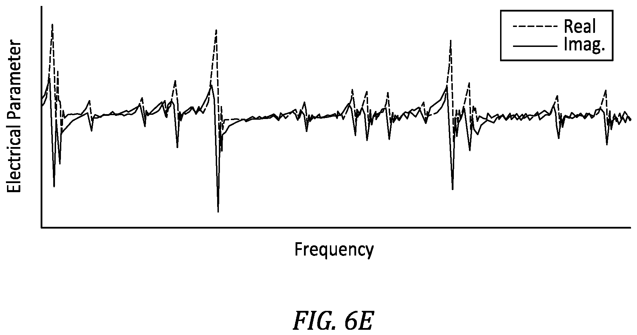

During the min-max-mean technique, the real measured parameter data and the imaginary measured parameter data may each optionally be filtered to provide the real measured parameter data and the imaginary measured parameter data in FIG. 6B. This optional filtering may be performed using a Gaussian filter to remove affects associated with ringing from the measure parameter data. Referring to FIG. 6C, each set of the measured parameter data may then by divided into a plurality of segments (e.g., bins) 600A-E (generally referred to as "600") along the tested frequency range - the frequency range across which the vibrations were induced during the step 408. Each segment 600 in FIG. 6C has a common (the same) frequency width 602. This frequency width 602 may be selected such that each segment 600 is larger than a maximum frequency width of peaks in the respective measured parameter data. Referring to FIG. 6D, a minimum value 604A-E (generally referred to as "604") of the real measured parameter data is determined for each segment 600. These minimum values 604 are then used (e.g., connected point-to-point) to determine a minimum value trend 606 for the real measured parameter data. Similarly, a mean value 608A-E (generally referred to as "608") of the imaginary measured parameter data is determined for each segment 600, for example at a midpoint along the respective segment 600. These mean values 608 are then used (e.g., connected point-to-point) to determine a mean value trend 610 for the real measured parameter data. Referring to FIG. 6E, data indicative of the minimum value trend 606 for the real measured parameter data may then be subtracted from the real measured parameter data to provide filtered measurement data associated with the response signal which is in phase with the vibrations induced by the vibration actuator 42 / the voltage provided to the vibration actuator 42 from the signal generator 78. This filtered measurement data may be substantially or only indicative of the vibratory response in the powerplant component 22 without noise from response(s) in the inspection scope member(s) 42, 44, 62. Similarly, data indicative of the mean value trend 610 for the imaginary measured parameter data may be subtracted from the imaginary measured parameter data to provide filtered measurement data associated with the response signal which is out of phase with the vibrations induced by the vibration actuator 42 / the voltage provided to the vibration actuator 42 from the signal generator 78. This filtered measurement data may be substantially or only indicative of the vibratory response in the powerplant component 22 without noise from response(s) in the inspection scope member(s) 42, 44, 62.

FIG. 7A graphically illustrates another example of the measurement data obtained during the step 410. This measurement data is indicative of measured parameter data (e.g., a value of the measured electrical parameter) as a function of frequency. This measured parameter data may include both real measured parameter data and imaginary measured parameter data.

During the liftering technique, the real measured parameter data and the imaginary measured parameter data are each filtered in the frequency domain using a lifter; e.g., a high-pass lifter. Herein, the term "lifter" may describe a device and/or a program that filters data in the frequency domain rather than in the time domain. Referring to FIG. 7B, the lifter determines a trend 700 for the real measured parameter data. Similarly, the lifter determines a trend 702 for the imaginary measured parameter data. Referring to FIG. 7C, the lifter then subtracts data indicative of the trend 700 for the real measured parameter data from the real measured parameter data to provide filtered measurement data associated with the response signal which is in phase with the vibrations induced by the vibration actuator 42 / the voltage provided to the vibration actuator 42 from the signal generator 78. This filtered measurement data may be substantially or only indicative of the vibratory response in the powerplant component 22 without noise from response(s) in the inspection scope member(s) 42, 44, 56, 58. Similarly, the lifter subtracts data indicative of the trend 702 for the imaginary measured parameter data from the imaginary measured parameter data to provide filtered measurement data associated with the response signal which is out of phase with the vibrations induced by the vibration actuator 42 / the voltage provided to the vibration actuator 42 from the signal generator 78. This filtered measurement data may be substantially (or only) indicative of the vibratory response in the powerplant component 22 without noise from response(s) in the inspection scope member(s) 42, 44, 56, 58.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An inspection method, comprising:
inserting a head (40) of an inspection scope (28) into an interior (26) of a powerplant (24), the head (40) of the inspection scope (28) comprising an actuator (42, 56) and a sensor (44, 58), and the powerplant (24) comprising a component (22) within the interior (26) of the powerplant (24);
abutting the head (40) of the inspection scope (28) against a surface (54) of the component (22);
inducing vibrations in the component (22) using the actuator (42, 56);
measuring a vibratory response excited by the vibrations using the sensor (44, 58) to provide measurement data; and
filtering the measurement data to provide filtered data, the filtering comprising detrending the measurement data.

2. The inspection method of claim 1, wherein:
the vibratory response comprises a vibratory response in the component (22) and a vibratory response in the head (40) of the inspection scope (28); and
the filtering comprises filtering the measurement data to remove data indicative of the vibratory response in the head (40) of the inspection scope (28).

3. The inspection method of claim 1, wherein:
the actuator (42, 56) comprises a piezoelectric actuator (56);
the sensor (44, 58) comprises a piezoelectric sensor (58);
the vibratory response comprises a vibratory response in the component (22), a vibratory response of the piezoelectric actuator (56) and a vibratory response of the piezoelectric sensor (58); and
the filtering comprises filtering the measurement data to remove at least one of data indicative of the vibratory response of the piezoelectric actuator (56) or data indicative of the vibratory response of the piezoelectric sensor (58), optionally wherein the piezoelectric actuator (56) engages the surface (54) of the component (22) longitudinally through the piezoelectric sensor (58).

4. The inspection method of claim 1, wherein:
the actuator (42) and the sensor (44) are integrated into a piezoelectric transducer (62);
the vibratory response comprises a vibratory response in the component (22) and a vibratory response of the piezoelectric transducer (62); and
the filtering comprises filtering the measurement data to remove data indicative of the vibratory response of the piezoelectric transducer (62).

5. The inspection method of any preceding claim, wherein the vibrations are induced in the component (22) across a frequency range, the vibratory response is measured across the frequency range to provide the measurement data, the measurement data is indicative of measured parameter data versus frequency across the frequency range, and the filtering comprises:
dividing the measured parameter data into a plurality of segments (600A-E) along the frequency range;
determining minimum values (604A-E) of the measured parameter data for the plurality of segments (600A-E);
determining minimum value trend data (606) based on the minimum values (604A-E) of the measured parameter data for the plurality of segments (600A-E); and
subtracting the minimum value trend data (606) from the measured parameter data.

6. The inspection method of claim 5, wherein the measured parameter data is indicative of a measured electrical admittance.

7. The inspection method of claim 5 or 6, wherein the measured parameter data is in phase with the vibrations induced by the actuator (42, 56).

8. The inspection method of any of claims 1 to 4, wherein the vibrations are induced in the component (22) across a frequency range, the vibratory response is measured across the frequency range to provide the measurement data, the measurement data is indicative of measured parameter data versus frequency across the frequency range, and the filtering comprises:
dividing the measured parameter data into a plurality of segments (600A-E) along the frequency range;
determining mean values (608A-E) of the measured parameter data for the plurality of segments (600A-E);
determining mean value trend data (610) based on the mean values (608A-E) of the measured parameter data for the plurality of segments (600A-E); and
subtracting the mean value trend data (610) from the measured parameter data.

9. The inspection method of claim 8, wherein the mean values (608A-E) of the measured parameter data for the plurality of segments (600A-E) are determined at midpoints of the plurality of segments (600A-E).

10. The inspection method of claim 8 or 9, wherein the measured parameter data is indicative of a measured electrical admittance.

11. The inspection method of any of claims 8 to 10, wherein the measured parameter data is out of phase with the vibrations induced by the actuator (42, 56).

12. The inspection method of any of claims 1 to 4, wherein the measurement data is filtered using a lifter, optionally wherein the lifter comprises a high-pass lifter.

13. The inspection method of any preceding claim, further comprising detecting a defect internal to the component (22) using the filtered data.

14. The inspection method of any preceding claim, wherein:
the powerplant (24) comprises a turbine engine; and
the component (22) is configured as a rotor disk.

15. The inspection method of any preceding claim, wherein the powerplant (24) is installed with an aircraft during at least the inserting, the abutting, the inducing and the measuring.
